# EUROPEAN PATENT SPECIFICATION

(11) **EP 1 872 978 B1**
(45) Date of publication and mention of the grant of the patent: **05.05.2010**
(21) Application number: 06732137.2
(22) Date of filing: 20.04.2006
(51) Int. Cl.: B60C 17/06

(54) **RUN FLAT SUPPORT BODY FOR PNEUMATIC TIRE**
NOTLAUFSTÜTZKÖRPER FÜR LUFTREIFEN
CORPS DE SOUTIEN POUR AFFAISSEMENT LIMITE DE PNEU

(30) Priority: 20.04.2005 JP 2005122738
(43) Date of publication of application: 02.01.2008
(73) Proprietor: The Yokohama Rubber Co., Ltd., Minato-ku Tokyo 105-8685 (JP)
(72) Inventor: NAITO, Mitsuru, c/o The Yokohama Rubber Co., Ltd., Hiratsuka-shi, Kanagawa 254-8601 (JP)
(74) Representative: HOFFMANN EITLE
(86) International application number: PCT/JP2006/308279
(87) International publication number: WO 2006/112499

(56) References cited:
- JP-A- 2004 168 152
- JP-A- 2004 224 331
- JP-A- 2005 053 271
- JP-A- 2005 138 651
- JP-A- 2005 145 142

## Description

### TECHNICAL FIELD

The present invention relates to a run flat supporter for pneumatic tire, and specifically to a run flat supporter for pneumatic tire which can be used for a plurality of kinds of pneumatic tires having different tire sizes.

### BACKGROUND ART

As means for achieving emergency running to an auto repair shop even when a pneumatic tire is punctured during the traveling of a vehicle, there is a run flat supporter, which is inserted in a pneumatic tire as a core system. A wide variety of run flat supporters of the core system have been proposed. Among these, the following run flat supporter has an advantage that the run flat supporter can be used without any structural changes in a conventional wheel. Specifically, in this run flat supporter, the main body is constituted of an annular shell bifurcated into right and left leg portions in a cross section taken along the tire width direction, and the annular shell is supported with both of the leg portions mounted respectively on the right and left seats of a rim of a wheel (refer to Patent Documents 1 and 2).

However, the above-described run flat supporter cannot be used widely for a plurality of kinds of pneumatic tires having different tire sizes, and can be used only for a pneumatic tire of one tire size. Accordingly, it is necessary to prepare many kinds of run flat supporters for tires having different tire sizes. For this reason, the run flat supporter has disadvantages that production cost increases and storage management becomes very complicated.
[Paten Document 1] Japanese patent application *Kokai* publication No. 2004-51088
[Paten Document 2] Japanese patent application *Kokai* publication No. 2004-42847, which represents the closest prior art document.

### DISCLOSURE OF THE INVENTION

An object of the present invention is to provide a run flat supporter for pneumatic tire which can be used for a plurality of kinds of pneumatic tires having different tire sizes, and specifically which can be used for a plurality of kinds of pneumatic tires having the same inner diameter of the bead portion while having different tire widths.

To achieve the above-described object, a run flat supporter for pneumatic tire of the present invention includes an annular shell and elastic rings. The annular shell has an outer peripheral side formed as a tire support surface and an inner peripheral side bifurcated into left and right leg portions. The elastic rings are attached respectively to the tips of the left and right leg portions. The run flat supporter is supported on the left and right seats of a rim of a wheel with the elastic rings interposed therebetween. The run flat supporter for pneumatic tire is **characterized in that** at least one of the left and right leg portions of the annular shell is divided into an outer-diameter-side shell and an inner-diameter-side shell, and the inner-diameter-side shell is connected to the outer-diameter-side shell so as to be displaceable in the tire axial direction.

The run flat supporter for pneumatic tire of the present invention has the configuration in which, at least one of the left and right leg portions of the annular shell is divided into an outer-diameter-side shell and an inner-diameter-side shell, and the inner-diameter-side shell is connected to the outer-diameter-side shell so as to be displaceable in the tire axial direction. Accordingly, by changing of the above-described connection position, it is able for the run flat supporter for pneumatic tire to use for a plurality of kinds of pneumatic tires having the same inner diameter of the bead portion while having different tire widths. As a result, the number of kinds of run flat supporters can be decreased, so that the production costs can be decreased and the maintenance management can be simplified.

### BRIEF DESCRIPTION OF THE DRAWINGS

[Fig. 1] is a cross-sectional view taken along the meridional direction, and showing a run flat supporter for pneumatic tire according to an embodiment of the present invention.
[Fig. 2] is a cross-sectional view taken along the meridional direction, and showing a tire/wheel assembly in which the run flat supporter of the present invention is mounted.
[Fig. 3] is a cross-sectional view taken along the meridional direction, and showing a chief part of a run flat supporter for pneumatic tire according to another embodiment of the present invention.
[Fig. 4] (a) and (b) are each a cross-sectional view taken along the meridional direction, and showing a chief part of a run flat supporter for pneumatic tire according to still another embodiment of the present invention.

### BEST MODES FOR CARRYING OUT THE INVENTION

The present invention is described in detail below with reference to embodiments shown in the accompanying drawings.

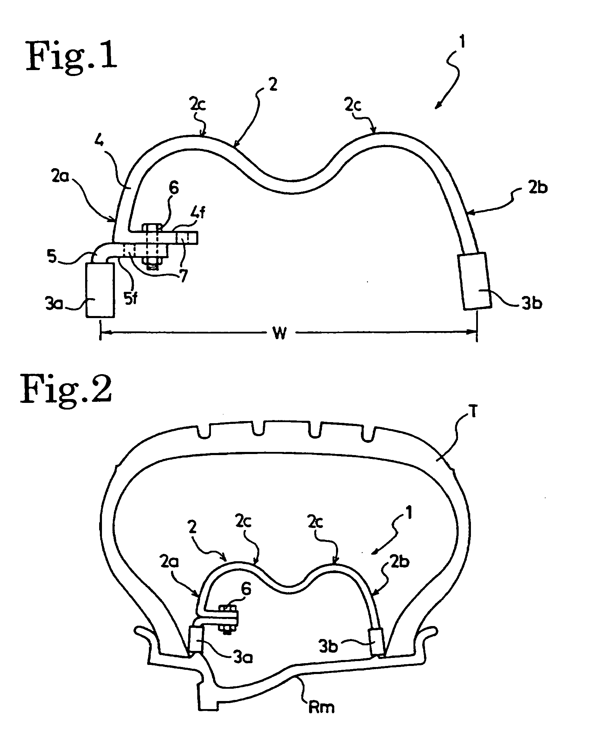

Fig. 1 shows a cross-sectional view taken along the meridional direction of a run flat supporter for pneumatic tire according to an embodiment of the present invention. A run flat supporter 1 has a main body constituted of an annular shell 2. The annular shell 2 includes an outer peripheral side formed as a tire support surface 2c and an inner peripheral side bifurcated into two leg portions 2a, 2b on the left and right sides. The tire support surface 2c is formed of two arc-shaped wall surfaces aligned with each other. In addition, elastic rings 3a, 3b are attached respectively to the tips of the left and right leg portions 2a, 2b.

Of the above-described left and right leg portions 2a, 2b, the leg portion 2a is divided into two parts; an outer-diameter-side shell 4 and an inner-diameter-side shell 5. Flanges 4f and 5f are formed respectively in these outer-diameter-side shell 4 and inner-diameter-side shell 5. The flanges 4f and 5f extend in the tire axial direction so as to overlap each other in parallel. A plurality of bolt-holes 7 are provided at predetermined intervals in the tire axial direction in each of the flanges 4f and 5f. One set of bolt-holes is selected from among the group of bolt-holes 7 of each of the flanges 4f and 5f, and the flanges 4f and 5f are integrally fixed to each other using a fastener 6 such as a bolt. Accordingly, it is possible to arbitrarily adjust the distance w in the tire axial direction between the both leg portions 2a and 2b by relatively displacing the flanges 4f and 5f in the tire axial direction, and by selecting any one set of bolt holes 7 for fastening.

As shown in Fig. 2, the above-described run flat supporter 1 is installed in a cavity inside a pneumatic tire T, and is then mounted on a rim Rm of a wheel along with the pneumatic tire T, thus constituting a tire/wheel assembly. As described above, when installing the run flat supporter 1 in the pneumatic tire T, the above-described distance w between the leg portions 2a and 2b of the annular shell 2 is adjusted in advance, so that one kind of run flat supporter, i.e., the run flat supporter 1 can be used for a plurality of kinds of pneumatic tires having the same inner diameter of bead portion while having different tire widths.

In the embodiment of Fig. 1, although the tire support surfaces 2c of the annular shell 2 are formed of two arc-shaped wall surfaces, the number of the arc-shaped wall surfaces is not limited in particular, may be one, and may be three or more. Further, on the dividing of the leg portions of the annular shell 2, although the left leg portion 2a is divided into the outer-diameter-side shell 4 and the inner-diameter-side shell 5 in this embodiment, the right leg portion 2b may be divided into another outer-diameter-side shell 4 and another inner-diameter-side shell 5 instead. Alternatively, both left and right leg portions 2a and 2b may be each divided into the outer-diameter-side shell 4 and the inner-diameter-side shell 5.

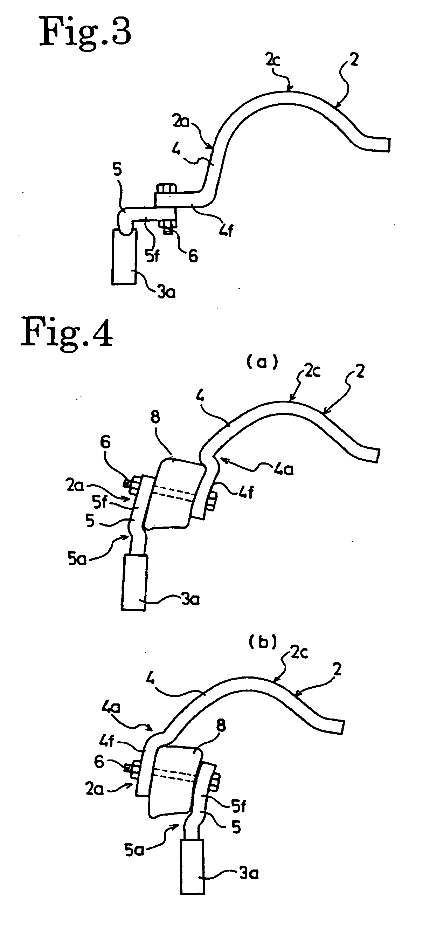

Further, in the embodiment of Fig. 1, although, as the means for fastening the outer-diameter-side shell 4 and the inner-diameter-side shell 5, the plurality of holes 7 are formed, one long hole extending in the tire axial direction may be provided to each of the outer-diameter-side shell 4 and the inner-diameter-side shell 5 instead of the plurality of holes. Although the flanges 4f and 5f are formed by bending the outer-diameter-side shell 4 and the inner-diameter-side shell 5 in the inward direction of the tire, as shown in Fig. 3, the flange 4f of the outer-diameter-side shell 4 may be bent from the outward direction of the tire so that the flange 4f extends in the opposite direction.

Each of Figs. 4(a) and 4(b) exemplifies a chief part of a run flat supporter for pneumatic tire of another embodiment of the present invention.

The embodiments of Figs 4(a) and 4(b) are the same as Fig. 1 in that a leg portion 2a of a run flat supporter 1 is divided into an outer-diameter-side shell 4 and an inner-diameter-side shell 5, and in that flanges 4f, 5f are formed respectively in the outer-diameter-side shell 4 and the inner-diameter-side shell 5. However, the embodiments of Figs 4(a) and 4(b) are different in that directions in which the flanges 4f, 5f extend intersect the tire axial direction.

In the embodiment of Fig. 4(a), a flange 4f of an outer-diameter-side shell 4 extends inward in the tire radial direction through a step 4a bent inward in the tire axial direction while a flange 5f of an inner-diameter-side shell 5 extends outward in the tire radial direction through a step 5a bent outward in the tire axial direction. A spacer 8, which is replaceable with another one having a different thickness, is interposed between the inner flange 4f and the outer flange 5f, and then the flange 4f and the flange 5f are fastened using a fastener 6.

In the embodiment of Fig. 4(b), in contrast to the above case in Fig. 4(a), a flange 4f of an outer-diameter-side shell 4 extends inward in the tire radial direction through a step 4a bent outward in the tire axial direction while a flange 5f of an inner-diameter-side shell 5 extends outward in the tire radial direction through a step 5a bent inward in the tire axial direction. A spacer 8, which is replaceable with another one having a different thickness, is interposed between the inner flange 4f and the outer flange 5f, and then the flange 4f and the flange 5f are fastened using a fastener 6.

As described above, by connecting the flange 4f of the outer-diameter-side shell 4 and the flange 5f of the inner-diameter-side shell 5 with the spacer 8, which is replaceable with another one having a different thickness, interposed between the flange 4f and the flange 5f, the distance W in the tire axial direction between the leg portions 2a and 2b of the annular shell 2 can be adjusted in accordance with the widths of tires. Further, it is preferable that the steps 4a and 5a be formed respectively in the positions where the flanges 4f and 5f are formed. By providing these steps 4a and 5a, the outer-diameter-side shell 4 and the inner-diameter-side shell 5 can be firmly connected to each other.

As described above, in the run flat supporter for pneumatic tire of the present invention, at least one of the both leg portions of the annular shell is divided into the outer-diameter-side shell and the inner-diameter-side shell, and the inner-diameter-side shell is connected to the outer-diameter-side shell so as to be displaceable in the tire axial direction. Accordingly, the run flat supporter for pneumatic tire can be used for a plurality of kinds of pneumatic tires having different tire sizes, and particularly for a plurality of kinds of pneumatic tires having the same inner diameter of bead portion while having different tire widths. Hence, the number of kinds of run flat supporters can be decreased as much as possible, so that the production costs can be decreased and the maintenance management can be simplified.

## Claims

1. A run flat supporter (1) for pneumatic tire (T) which comprises: an annular shell (2) having an outer peripheral side formed as a tire support surface (2c) and an inner peripheral side bifurcated into left (2a) and right (2b) leg portions; and elastic rings (3a, 3b) attached to each of the tips of the left and right leg portions which are supported on the left and right seats of a rim (Rm) of a wheel, wherein
at least one of the left and right leg portions of the annular shell is divided into an outer-diameter-side shell (4) and an inner-diameter-side shell(s);
**characterized in that**
the inner-diameter-side shell is connected to the outer-diameter-side shell so as to be displaceable in the tire axial direction.

2. The run flat supporter for pneumatic tire according to claim 1, wherein
portions of the outer-diameter-side shell and the inner-diameter-side shell, which are connected to each other, are formed as flanges (4f, 5f) respectively to extend in a direction parallel to the tire axial direction as well as overlap each other, and
the flanges are fastened to each other so as to be displaceable relatively in the tire axial direction.

3. The run flat supporter for pneumatic tire according to claim 1, wherein
portions of the outer-diameter-side shell and the inner-diameter-side shell, which are connected to each other, are formed as flanges (4f, 5f) respectively to extend parallel to a direction intersecting the tire axial direction as well as overlap each other, and
the flanges are fastened to each other by interposing a spacer (8) therebetween replaceably with another one having a different thickness.

4. The run flat supporter for pneumatic tire according to claim 3, wherein the flanges of the outer-diameter-side shell and the inner-diameter-side shell are formed to have steps (4a, 5a) locking the ends of the spacer.

5. A tire/wheel assembly wherein a run flat supporter according to any one of claims 1 to 4 is installed in a pneumatic tire mounted on rims of a wheel.

## Patentansprüche

1. Notlaufträger (1) für einen pneumatischen Reifen (T), der umfasst: eine ringförmige Hülle (2), die eine Außenumfangsseite, die als eine Reifenunterstützungsoberfläche (2c) ausgebildet ist, und eine Innenumfangsseite aufweist, die in linke (2a) und rechte (2b) Fußabschnitte gegabelt ist; und elastische Ringe (3a, 3b), die an jeder der Vorderseiten der linken und rechten Fußabschnitte angebracht sind, die auf den linken und rechten Sitzen einer Felge (Rm) eines Rads unterstützt sind, bei dem
wenigstens einer der linken und rechten Fußabschnitte der ringförmigen Hülle in eine Hülle der Seite des Außendurchmessers (4) und eine Hülle der Seite des Innendurchmessers (5) unterteilt ist; **dadurch gekennzeichnet, dass**
die Hülle der Seite des Innendurchmessers so mit der Hülle der Seite des Außendurchmessers verbunden ist, um in der axialen Reifenrichtung versetzbar zu sein.

2. Notlaufträger für einen pneumatischen Reifen nach Anspruch 1, bei dem
Abschnitte der Hülle der Seite des Außendurchmessers und der Hülle der Seite des Innendurchmessers, die miteinander verbunden sind, entsprechend als Flansche (4f, 5f) ausgebildet sind, die sich sowohl in einer Richtung parallel zur axialen Reifenrichtung erstrecken als auch einander überlappen, und
die Flansche so aneinander befestigt sind, dass diese relativ in der axialen Reifenrichtung versetzbar sind.

3. Notlaufträger für einen pneumatischen Reifen nach Anspruch 1, bei dem
Abschnitte der Hülle der Seite des Außendurchmessers und der Hülle der Seite des Innendurchmessers, die miteinander verbunden sind, entsprechend als Flansche (4f, 5f) ausgebildet sind, die sich sowohl parallel zu einer Richtung erstrecken, welche die axiale Reifenrichtung schneidet, als auch einander überlappen, und
die Flansche durch dazwischen Vorsehen eines Abstandshalters (8), der mit einem anderen, der eine andere Dicke aufweist, austauschbar ist, befestigt sind.

4. Notlaufträger für einen pneumatischen Reifen nach Anspruch 3, bei dem die Flansche der Hülle der Seite des Außendurchmessers und der Hülle der Seite des Innendurchmessers ausgebildet sind, um Stufen (4a, 5a) aufzuweisen, welche die Enden des Abstandshalters arretieren.

5. Reifen-/Radanordnung, bei der ein Notlaufträger nach einem der Ansprüche 1 bis 4 in einem pneumatischen Reifen installiert ist, der auf Felgen eines Reifens aufgezogen ist.

## Revendications

1. Corps de soutien pour roulage à plat (1) pour un pneu (T) pneumatique qui comprend : une coque annulaire (2) ayant un côté périphérique extérieur formé en tant que surface de soutien de pneu (2c) et un côté périphérique intérieur se divisant en parties formant montants gauche (2a) et droit (2b) ; et des anneaux élastiques (3a, 3b) attachés à chacune des extrémités des parties formant montants gauche et droit qui sont soutenus sur les appuis gauche et droit d'une jante (Rm) d'une roue, dans lequel
au moins une des parties formant montants gauche et droit de la coque annulaire est divisée en une coque côté diamètre extérieur (4) et en une coque côté diamètre intérieur (5) ;
**caractérisé en ce que**
la coque côté diamètre intérieur est reliée à la coque côté diamètre extérieur de façon à pouvoir être déplacée dans la direction axiale du pneu.

2. Corps de soutien pour roulage à plat pour pneu pneumatique selon la revendication 1, dans lequel
des parties de la coque côté diamètre extérieur et de la coque côté diamètre intérieur, qui sont reliées l'une à l'autre, sont formées respectivement en tant que rebords (4f, 5f) pour s'étendre dans une direction parallèle à la direction axiale du pneu aussi bien que pour se chevaucher, et
les rebords sont fixés l'un à l'autre de façon à pouvoir être déplacés de manière relative dans la direction axiale du pneu.

3. Corps de soutien pour roulage à plat pour pneu pneumatique selon la revendication 1, dans lequel
des parties de la coque côté diamètre extérieur et de la coque côté diamètre intérieur, qui sont reliées l'une à l'autre, sont formées respectivement en tant que rebords (4f, 5f) pour s'étendre parallèlement à une direction croisant la direction axiale du pneu aussi bien que pour se chevaucher, et
les rebords sont fixés l'un à l'autre en interposant entre ceux-ci une pièce d'écartement (8) pouvant être remplacée par une autre ayant une épaisseur différente.

4. Corps de soutien pour roulage à plat pour pneu pneumatique selon la revendication 3, dans lequel les rebords de la coque côté diamètre extérieur et de la coque côté diamètre intérieur sont formés pour avoir des épaulements (4a, 5a) verrouillant les extrémités de la pièce d'écartement.

5. Ensemble pneu / roue dans lequel un corps de soutien pour roulage à plat selon l'une quelconque des revendications 1 à 4 est installé dans un pneu pneumatique monté sur les jantes d'une roue.
